# EUROPEAN PATENT APPLICATION

(11) **EP 1 138 533 A2**
(43) Date of publication of application: **04.10.2001**
(21) Application number: 01108186.6
(22) Date of filing: 30.03.2001
(51) Int. Cl.: B60H 1/00

(54) **Mounting bracket**

(30) Priority: 30.03.2000 DE 20005887 U
(71) Applicant: SKG Italiana S.P.A., 43040 Scarzara (Parma) (IT)
(72) Inventor: Bernini, Michele, 43040 Scarzara (Parma) (IT)
(74) Representative: Grünecker, Kinkeldey, Stockmair & Schwanhäusser Anwaltssozietät

(57) **Abstract**

A mounting bracket for a refrigerant pressure container C of a vehicle air-conditioning system, particularly a dryer or an accumulator, comprises a mounting plate K with securing openings 1 to 4 and at least one holding bracket H with a lock for gripping said pressure container, is provided with a quick clamping lock S with integrated form-positive elements Z1, Z2 for clamping and holding said pressure container.

## Description

The present invention relates to a mounting bracket of the kind as disclosed in the preamble part of claim 1.

The refrigerant-pressure container of an automobile air conditioning system is to be mounted within the refrigerant piping system most frequently within the motor compartment of the vehicle at a dashboard or at another component by means of the mounting bracket. Conventionally the pressure container is supplied in a prefabricated conditioned with already positioned mounting bracket as a pre-assembled structural unit as it then will be assembled. For repairs or an exchange of the pressure container and in order to adjust the holding force the bracket block is made adjustable or detachable, respectively. For this purpose, at an interpretation of the bracket outwardly oriented flaps are formed which can be pulled to another by means of a tensioning screw. Normally a mounting bracket is already designed for the respective assembly condition, i.e. the fastening openings in the plate already are provided with the opening pattern which fits to the type of the vehicle or the air-conditioning system. In case that the same or a similar pressure container is to be used in another assembly case this will need another mounting bracket. The lock with the flaps and the fastening element are protruding relatively far which is undesirable in view of the narrow mounting space relationships within a motor compartment. Moreover, the fastening element might be unscrewed in case of thermal influences and vibrations caused by the operation of the system.

It is a task for the invention to provide a mounting bracket of the kind as mentioned at the beginning which is simple in view to manufacturing and assembly, which assures high operational safety, and which does not waste mounting space.

Said task can be achieved according to the inventions by the features of claim 1.

The quick clamping lock integrated into the bracket allows a simple and comfortable pre-assembly. The quick clamping lock consumes only little space and considers narrow mounting space relationships. Since the quick clamping lock already includes all components necessary for its function no additional fastening element is necessary and the danger is excluded that such fastening elements may unscrew themselves.

Moreover, the quick clamping lock allows to compensate for manufacturing depending diameter tolerances of pressure containers and to be used for a limited range of differently dimensioned pressure containers.

A detachable quick clamping lock allows to exchange the pressure container at any time.

It is, however, preferred to have a quick clamping lock of the non-detachable type assuring high operational safety because it cannot get loose by itself and cannot be opened by unauthorised persons without being destroyed.

A relatively wide diameter range of pressure containers can be covered by toothings, particularly saw-toothings. The desired holding tension of the bracket at the pressure container can be adjusted very precisely. Multiple teeth in the toothings are distributing the holding force among each other, assist each other, and have an emergency holding function. Particularly saw-teeth with tooth surfaces oriented essentially radial to the axis of the pressure container do not create inadvertent opening force components spreading the bracket ends. Intentionally provided cut-back angles of the carrying tooth surfaces allow to lock the quick clamping lock tighter even automatically under tension.

If at least one of the release blocking elements is provided at an arm which only can be brought into a release position by breaking an intended breaking spot it is assured that the quick clamping cannot be opened compulsorily and that in connection with a change of the pressure container a new mounting bracket has to be inserted in order to achieve the previous safety standards after the change.

In order to generate a sufficiently high holding force tool engagement zones are expedient which ought to be structured such that a tool as used cannot slip off.

The mounting bracket with the quick clamping lock provided within the bracket and its plate can be an injection formed part of plastic material which can be produced with minimum costs.

If one of the toothings is provided at the outer side of a bracket end which is smooth at its inner side, and if the other toothing is located within a depression of the other bracket end, along almost the entire tension length a surface contact between the bracket and the pressure container can be achieved. The guiding shoulder serves that the toothings engage another properly and maintain their necessary relative positions when locked.

As an additional measure guiding profiles can be used between the other bracket end and said arm, which guiding profiles can be brought into mutual engagement so that said arm is properly supported.

Within the motor compartment of a vehicle there are cables, tubes or pipings, not only of the air-conditioning system, which have to be supported and/or positioned at different locations. The mounting bracket can be used according to the invention as a place for mounting and positioning means, since the mounting bracket offers sufficient free spots and has to be fixed stationarily. The positive configuration of such means simplifies fixing of cables, tubes or pipings, etc. without further equipment. Said assisting means should be formed spring clips which can be used easily and are reliable.

Assembly of the mounting bracket is facilitated if at the fixing openings sockets are provided which allow to preposition and secure nuts or screw heads. A nut or a screw head inserted in said socket needs not to be supported against rotation during tightening the connection.

Additionally, it can be expedient to provide a holding nose within the fixing opening, which holding nose engages at the shank of the respective fastening element and secures the same in the correct axial position. This is of particular advantage for pre-assembling the mounting bracket with its fastening elements, because said fastening elements then will be pre-positioned for transport storing and the assembly procedure without a danger to get lost.

In order to employ the same mounting bracket universally for different assembly cases it is of advantage to provide several different mounting openings arranged in different opening patterns.

The quick clamping lock is expediently not positioned in an protruding location diametrically opposed to the mounting plate, but is situated sidewardly at a location where it disturbs the least. In order to avoid breaking the bracket during pre-assembly or assembly and in order to allow to position the bracket comfortably on the pressure container, said bracket should have a portion of reduced bracket thickness essentially diametrically opposed to the quick clamping lock.

An embodiment of the invention will be explained with the help of the drawing. In the drawing is:
- Fig. 1: a perspective view of a mounting bracket prior to an assembly, and
- Fig. 2: an enlarged plan view of a detail of the mounting bracket, in already assembled condition.

A mounting bracket B for a pressure container C for the refrigerant of an automobile air-conditioning system consists mainly of a essentially cylindrical holding bracket H including an integrated quick clamping lock S and of a plate-shaped securing member K which is unitarily formed via a connection portion 5 at the holding bracket H.

Within plate K several securing openings 1 to 4 are formed, i.e., several groups of respective associated securing openings with different opening patterns. For example, selectively one group of the securing openings can be used to mount the mounting bracket B within the motor compartment of a vehicle. The connection portion 5 is stiffened by ribs and contains passages. Said holding bracket H is interrupted in circumferential direction such that two free bracket ends 6, 7 are formed. In this area said quick clamping lock S is provided. In the inner side of bracket end 6 is provided a depression 11 which is open to the inside and contains a toothing Z1. The depth of said recess 11 corresponds approximately to the thickness of the other bracket end 7. Said other bracket end 7 is smooth at its inner side and is provided at its outer side with a further toothing Z2. For example at one edge of recess 11 which edge is oriented in tensioning direction, a guiding shoulder 12 for the lower edge of the other bracket end 7 is formed. Essentially diametrically opposed to said quick clamping lock S the thickness of the bracket is reduced in a circumferential portion 13, such that bracket end 7 relatively easily can be bent outwardly and inwardly.

In addition, said quick clamping lock S can be equipped with release locking elements 10, such that said quick clamping lock can not open after being correctly closed. However, even then said lock S can, if desired, be tightened in tensioning direction about said pressure container C (indicated by dotted lines).

In the connection portion 5 and/or at plate K (and even at the holding bracket H) at least one mounting and positioning means M is provided serving to fix other loose members provided in the motor compartment, e.g. cables, tubings, pipings, or the like. Each mounting and positioning means M, e.g., is formed as a boss having a clamping mouth 15 which extends over more than 180° such that a kind of a spring clip is constituted into which a cable, a tube or a pipe can clipped in.

Moreover, expediently sockets 16 are formed at plate K adjacent to said openings 3, 4 which sockets 16 serve to receive a screw head or a nut. Said sockets 16 are open in the direction of the plane of plate K and perpendicularly thereto and do have an inner cross-section which at least partially defines a part of a hexagon or a square. Said sockets 16 can be used to pre-assemble fixing elements for the mounting bracket. For assistance within the associated securing openings 3, 4 inwardly protruding holding noses 17 are formed for engaging at the shanks of the respective fastening elements in order to hold these in place and against being lost.

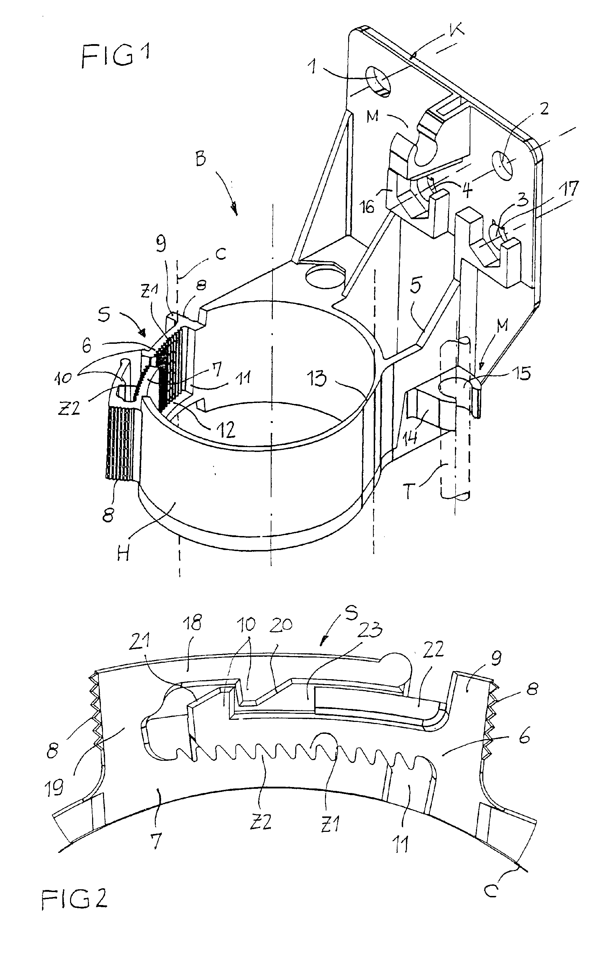

Said quick clamping lock S is shown in Fig. 2 in its holding position and with mounting bracket B secured to pressure container C. The toothings Z1, Z2 are shifted past another in tensioning direction. The saw teeth inter-engage by their essentially radially oriented tooth surfaces. It is provided a plurality of teeth defining a wide tensioning range. Several of said teeth are commonly carrying. If the toothings Z1 and Z2 engage into another the other bracket end 7 is provided within the recess 11 of said one bracket end 6, so that an essentially continuous and plane contact of bracket ends 6, 7 on the pressure container C is achieved. One of said release blocking elements 10 with the shape of a tooth having a ramp 21 is formed at the outer side of said one bracket end 6, optionally close to the end of the toothing Z1. The other release blocking element 10 is formed at the inner side of an arm 18 and also has the shape of a tooth with a ramp 20. Said arm 18 is connected to the other bracket end 7 at a portion 19 defining e.g. an intended breaking spot. Moreover, between the outer side of said first bracket end 6 and the inner side of said arm 18 guiding profiles 22, 23 are provided sliding in tensioning direction within each other. Projections 9 protruding outwardly from said bracket ends 6, 7 are formed with tool engagement zones 8, e.g. with serrations, in order to assure an effective tool engagement when closing said quick clamping lock S.

In order to assemble the mounting bracket B on a pressure container C first the quick clamping lock S is open (Fig. 1). After insertion of pressure container C and relative rotational positioning and axial adjustment of said mounting bracket B on said pressure container C, e.g. by an engagement of a tool at the tool engagement zones 8, both bracket ends 7, 6 are pushed past another. The toothings Z1, Z2 inter-engage. Also said release blocking elements 10 are shifted past another via said ramps 20, 21 until they grip behind another in the release blocking position. In said position the release blocking elements 10 can be distant further from another as shown. Of importance is that the arm 18 has to be de-formed so drastically for releasing said release blocking elements that it either breaks or is deformed so strongly that this deformation indicates a forced manipulation at the quick clamping lock.

## Claims

1. Mounting bracket for a refrigerant pressure container (C) of a vehicle air-conditioning system, particularly a drier or an accumulator, comprising a mounting plate (K) with securing openings (1 - 4) and at least one holding bracket (H) with a lock for gripping said pressure container (C) **characterised in that** said holding bracket (H) is provided with a quick clamping lock (S) with integrated form-positive elements (Z1, Z2) for clamping and holding said pressure container.

2. Mounting bracket as in claim 1, **characterised in that** said quick clamping lock (S) is made detachable.

3. Mounting bracket as in claim 1, **characterised in that** said quick clamping lock (S) comprises integrated release locking elements (10) and is made non-detachably.

4. Mounting bracket as in claim 1, **characterised in that** the quick clamping lock (S) is equipped with toothings (Z1, Z2) which can be moved past each other in tensioning direction and which can be locked at another in opposite directions, preferably saw toothings each with plural teeth.

5. Mounting bracket as in claim 4, **characterised in that** in addition to said toothings (Z1, Z2) at least two release blocking elements (10) are provided, which can be moved past another into at least one release blocking position, and that one of said release blocking elements is located at an arm (18) having an intended breaking spot (19) at which said arm is separated or irrevocable deformed if said release blocking positioning is forcefully overcome.

6. Mounting bracket as in claim 1, **characterised in that** said quick clamping lock (S) has tool engagement zones (8) facing counter to the closing direction, said tool engagement zone (8) being provided at projections (9) protruding outwardly from said bracket ends (6, 7).

7. Mounting bracket as in at least one the preceding claims, **characterised in that** said holding bracket (H) with its quick clamping lock (S) is a plastic material injection formed part, preferably with an unitarily integrated mounting plate (K).

8. Mounting bracket as in claim 4, **characterised in that** one toothing (Z2) is provided at the outer side of a first bracket end (7) which is smooth on its inner side, that said other toothing (Z1) is located in a recess (11) of said other bracket end (6), and that said recess (11) contains at least one guiding shoulder (12) for said first bracket end (7), said guiding should extending in clamping direction of said quick clamping lock.

9. Mounting bracket as in claim 5, **characterised in that** guiding profiles (22, 23) inter-engageable in clamping direction are provided between the outer side of said second bracket end (6) and said arm (18).

10. Mounting bracket as in at least one of the preceding claims, **characterised in that** at least one integrated positive mounting and positioning means (M) is provided at said mounting plate (K) and/or in the connecting portion (5) between said holding bracket (H) and said mounting plate (K) and/or at said mounting bracket (H).

11. Mounting bracket as in claim 10, **characterised in that** said mounting and positioning means (M) is formed as a spring clip (14, 15) for e.g. at least one cable, tubing or a piping (T), said clip having a clamping mouth extending over more than 180°.

12. Mounting bracket as in at least one of the preceding claims, **characterised in that** adjacent to at least one of said fastening openings (1 - 4) of said mounting plate (K) a socket (16) is provided with the shape of at least a partial hexagon or square and which is open in and/or perpendicular to the plane of the mounting plate, said socket serving to removably receive a nut or a screw head.

13. Mounting bracket as in at least one of the preceding claims, **characterised in that** in at least one of the fastening openings(1 - 4) a holding nose (17) is provided engaging into the cross-sectional area of said fastening opening.

14. Mounting bracket as in at least one of the preceding claims, **characterised in that** several groups of mounting openings (1 - 4) having different opening patterns are provided within the mounting plate (K).

15. Mounting bracket as in claim 1, **characterised in that** said quick clamping lock (S) is provided within a circumferential part of the holding bracket (H) located between said mounting plate (K) and a location at the bracket circumference diametrically opposed to said mounting plate (K).

16. Mounting bracket as in claim 1, **characterised in that** said holding bracket (H) is formed with reduced bracket thickness in a circumferential portion (13) which is essentially diametrically opposed to said quick clamping lock (S).
